(19) Europäisches Patentamt
European Patent Office
Office européen des brevets

(11) Veröffentlichungsnummer: **0 393 504 B1**

(12) # EUROPÄISCHE PATENTSCHRIFT

(45) Veröffentlichungstag der Patentschrift: **26.10.94**

(51) Int. Cl.5: **C07F 9/54**, C07F 5/02, G03G 9/135

(21) Anmeldenummer: **90106999.7**

(22) Anmeldetag: **11.04.90**

(54) **Phosphoniumverbindungen und Verfahren zu ihrer Herstellung.**

(30) Priorität: **15.04.89 DE 3912395**

(43) Veröffentlichungstag der Anmeldung:
**24.10.90 Patentblatt 90/43**

(45) Bekanntmachung des Hinweises auf die Patenterteilung:
**26.10.94 Patentblatt 94/43**

(84) Benannte Vertragsstaaten:
**AT CH DE FR GB IT LI NL**

(56) Entgegenhaltungen:
**DE-A- 2 936 211**
**JP-A- 5 967 250**
**JP-A- 5 967 251**

(73) Patentinhaber: **HOECHST AKTIENGESELLSCHAFT**

**D-65926 Frankfurt (DE)**

(72) Erfinder: **Gitzel, Jörg, Dr.**
**Domherrnstrasse 2**
**D-6234 Hattersheim am Main (DE)**
Erfinder: **Macholdt, Hans-Tobias, Dr.**
**Waldstrasse 20**
**D-6100 Darmstadt (DE)**
Erfinder: **Knaup, Wolfgang, Dr.**
**Kanalstrasse 3**
**D-8269 Burgkirchen (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 393 504 B1

**Beschreibung**

Gegenstand der vorliegenden Erfindung sind neue Phosphoniumverbindungen und Verfahren zu ihrer Herstellung.

Die vorliegende Erfindung betrifft im einzelnen neue Phosphoniumverbindungen der allgemeinen Formel (I)

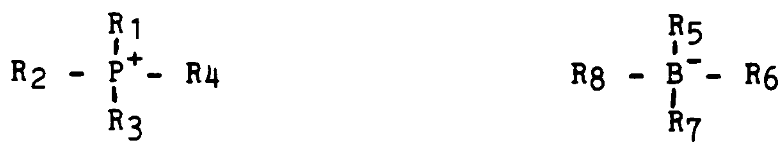

in welcher mindestens einer der Reste $R_1$ bis $R_4$ einen geradkettigen oder verzweigten, fluorsubstituierten, gesättigten Alkylrest mit 1 bis 30 C-Atomen und 3 bis 50 F-Atomen bedeutet, welcher weitere Halogenatome, wie Fluor-, Chlor-, Brom- oder Jodatome, Hydroxyl- und/oder Chlormethyl- und/oder Carbonsäureamid- und/oder Sulfonsäureamid- und/oder Urethan- und/oder Keto- und/oder Amino- und/oder $R_9$-O-$R_{10}$-Gruppen, worin $R_9$ und $R_{10}$ Alkyl($C_1$-$C_{30}$)-Reste darstellen, enthalten kann, oder mindestens einer der Reste $R_1$ bis $R_4$ einen fluorsubstituierten Arylrest, wie beispielsweise einen fluorsubstituierten Phenyl-, Toluyl- oder Naphthyl-Rest, oder einen am aromatischen Kern fluorsubstituierten Aralkylrest, wie beispielsweise einen fluorsubstituierten Benzylrest darstellt, wobei der Aryl- oder Aralkylrest am aromatischen Kern zusätzlich durch gesättigte oder ungesättigte, geradkettige oder verzweigte Alkyl($C_1$-$C_{30}$)-, Alkoxy($C_1$-$C_{30}$)-, Halogenalkyl($C_1$-$C_{30}$)-, Halogenalkoxy-($C_1$-$C_{30}$)-, Hydroxylgruppen oder Halogenatome, wie Fluor-, Chlor-, Brom- oder Jodatome, substituiert sein kann, und im Falle eines Aralkylrestes die Alkylbrücke zwischen Phosphoratom und aromatischem Ring 1 bis 30 C-Atome enthält, und höchstens drei der Reste $R_1$ bis $R_4$ unabhängig voneinander Wasserstoffatome, geradkettige oder verzweigte, ungesättigte oder gesättigte, substituierte oder unsubstituierte Alkylreste mit 1 bis 30 C-Atomen, Aryl-oder Aralkylreste, wie beispielsweise Phenyl-, Toluyl-, Naphthyl- oder Benzylreste, die am aromatischen Kern durch Alkyl($C_1$-$C_{30}$)-, Alkoxy($C_1$-$C_{30}$)-, Halogenalkyl($C_1$-$C_{30}$)-, Halogenalkoxy($C_1$-$C_{30}$)-, Hydroxylgruppen oder Halogenatome, wie Fluor-, Chlor-, Brom- oder Jodatome, substituiert sein können, darstellen, und $R_5$ bis $R_8$ Arylreste, wie beispielsweise Phenyl-, Toluyl- oder Naphthylreste, ferner Aralkylreste, wie beispielsweise den Benzylrest, oder Halogenarylreste, wie beispielsweise Fluorphenyl- oder Chlorphenylreste, bedeuten, sowie Gemische dieser Verbindungen.

Die Erfindung betrifft insbesondere solche Verbindungen der obengenannten allgemeinen Formel (I), in welcher mindestens einer der Reste $R_1$ bis $R_4$ einen geradkettigen oder verzweigten, fluorsubstituierten, gesättigten Alkylrest mit 4 bis 17 C-Atomen und 3 bis 25 F-Atome bedeutet, welcher weitere Halogenatome, wie Fluor-, Chlor-, Brom-oder Jodatome, Hydroxyl- und/oder Chlormethyl- und/oder Keto- und/oder $R_9$-O-$R_{10}$-Gruppen, worin $R_9$ und $R_{10}$ Alkyl($C_1$-$C_{18}$)-Reste darstellen, enthalten kann, oder mindestens einer der Reste $R_1$ bis $R_4$ einen fluorsubstituierten Arylrest, wie beispielsweise einen fluorsubstituierten Phenylrest, oder einen am aromatischen Kern fluorsubstituierten Aralkylrest, wie beispielsweise einen fluorsubstituierten Benzylrest, darstellt, wobei der Aryl- oder Aralkylrest am aromatischen Kern zusätzlich durch gesättigte oder ungesättigte, geradkettige oder verzweigte Alkyl($C_1$-$C_{18}$)-, Alkoxy($C_1$-$C_{18}$)-, Halogenalkyl($C_1$-$C_{18}$)-, Halogenalkoxy($C_1$-$C_{18}$)-, Hydroxylgruppen oder weitere Halogenatome, wie Fluor-, Chlor-, Brom- oder Jodatome, substituiert sein kann, und im Falle eines Aralkylrestes die Alkylbrücke zwischen Phosphoratom und aromatischem Ring 1 bis 18 C-Atome enthält, und höchstens drei der Reste $R_1$ bis $R_4$ unabhängig voneinander Wasserstoffatome, geradkettige oder verzweigte, ungesättigte oder gesättigte, substituierte oder unsubstituierte Alkylreste mit 1 bis 18 C-Atomen, Aryl- oder Aralkylreste, wie Phenyl-, Naphthyl- oder Benzylreste, die am aromatischen Kern durch Alkyl($C_1$-$C_{18}$)-, Alkoxy($C_1$-$C_{18}$)-, Halogenalkyl($C_1$-$C_{18}$)-, Halogenalkoxy($C_1$-$C_{18}$)-, Hydroxylgruppen oder Halogenatome, wie Fluor-, Chlor-, Brom- oder Jodatome, substituiert sein können, darstellen und $R_5$ bis $R_8$ Phenyl-, p-Toluyl-, p-Chlorphenyl- oder Naphthylreste bedeuten, sowie Gemische dieser Verbindungen.

Die Erfindung betrifft ganz besonders Verbindungen der oben genannten allgemeinen Formel (I), in welcher mindestens einer der Reste $R_1$ bis $R_4$ die Gruppe $-CH_2-CH_2-C_8F_{17}$ oder $-CH_2-CH_2-Rf$ (mit Rf = $C_6F_{13}$ bis $C_{11}F_{23}$), höchstens drei derReste $R_2$ bis $R_4$ einen Phenylrest und die Reste $R_5$ bis $R_8$ Phenyl-, p-Toluyl-, p-Chlorphenyl- oder Naphthylreste bedeuten, sowie Gemische dieser Verbindungen.

An Einzelverbindungen oder Gemischen von Verbindungen der allgemeinen Formel (I) seien beispielsweise folgende genannt:

$C_8F_{17}-CH_2-CH_2-\overset{+}{P}(Phenyl)_3 \quad B(Phenyl)_4^-$ (1)

$C_8F_{17}-CH_2-CH_2-\overset{+}{P}(Phenyl)_3 \quad B(p\text{-}Toluyl)_4^-$ (2)

$C_8F_{17}-CH_2-CH_2-\overset{+}{P}(Phenyl)_3 \quad B(p\text{-}Chlorphenyl)_4^-$ (3)

$Rf-CH_2-CH_2-\overset{+}{P}(Phenyl)_3$ $B(Phenyl)_4^-$ (4)
($Rf = C_6F_{13}$ bis $C_{11}F_{23}$)

$Rf-CH_2-CH_2-\overset{+}{P}(Phenyl)_3$ $B(p\text{-}Toluyl)_4^-$ (5)
($Rf = C_6F_{13}$ bis $C_{11}F_{23}$)

$Rf-CH_2-CH_2-\overset{+}{P}(Phenyl)_3$ $B(p\text{-}Chlorphenyl)_4^-$ (6)
($Rf = C_6F_{13}$ bis $C_{11}F_{23}$)

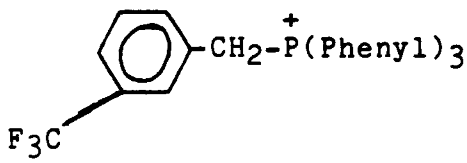 $B(Phenyl)_4^-$ (7)

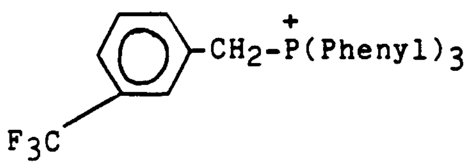 $B(p\text{-}Toluyl)_4^-$ (8)

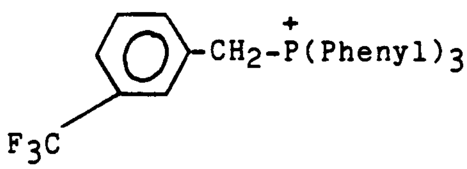 $B(p\text{-}Chlorphenyl)_4^-$ (9)

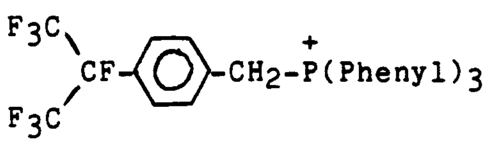 $B(Phenyl)_4^-$ (10)

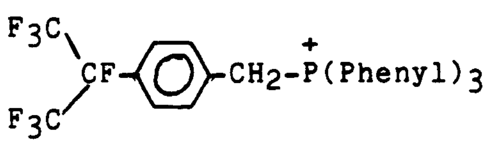 $B(p\text{-}Toluyl)_4^-$ (11)

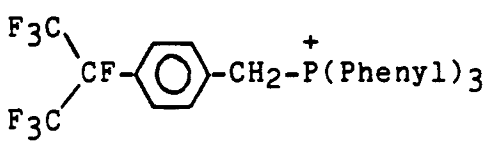 $B(p\text{-}Chlorphenyl)_4^-$ (12)

Die Phosphoniumverbindungen und Gemische aus Phosphoniumverbindungen der genannten allgemeinen Formel (I) können durch Umsetzen der Phosphoniumverbindungen sowie Gemischen aus Phosphoniumverbindungen der allgemeinen Formel (II)

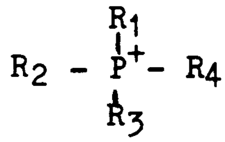 $X^-$ (II),

in welcher mindestens einer der Reste $R_1$ bis $R_4$ einen geradkettigen oder verzweigten, fluorsubstituierten, gesättigten Alkylrest mit 1 bis 30 C-Atomen und 3 bis 50 F-Atomen bedeutet, welcher weitere Halogenatome, wie Fluor-, Chlor-, Brom- oder Jodatome, Hydroxyl- und/oder Chlormethyl-und/oder Carbonsäureamid- und/oder Sulfonsäureamid- und/oder Urethan- und/oder Keto- und/oder Amino- und/oder $R_9$-O-$R_{10}$-Gruppen, worin $R_9$ und $R_{10}$ Alkyl($C_1$-$C_{30}$)-Reste darstellen, enthalten kann, oder mindestens einer der Reste $R_1$ bis $R_4$ einen fluorsubstituierten Arylrest, wie beispielsweise einen fluorsubstituierten Phenyl-, Toluyl-oder Naphthylrest, oder einen am aromatischen Kern fluorsubstituierten Aralkylrest, wie beispielsweise einen fluorsubstituierten Benzylrest darstellt, wobei der Aryl-oder Aralkylrest am aromatischen Kern zusätzlich durch gesättigte oder ungesättigte, geradkettige oder verzweigte Alkyl($C_1$-$C_{30}$)-, Alkoxy($C_1$-$C_{30}$)-, Halogenalkyl($C_1$-$C_{30}$)-, Halogenalkoxy($C_1$-$C_{30}$)-, Hydroxylgruppen oder Halogenatome, wie Fluor-, Chlor-, Brom- oder Jodatome, substituiert sein kann, und im Falle eines Aralkylrestes die Alkylbrücke zwischen Phosphoratom und aromatischem Ring 1 bis 30 C-Atome enthält, und höchstens drei der Reste $R_1$ bis $R_4$ unabhängig voneinander Wasserstoffatome, geradkettige oder verzweigte, ungesättigte oder gesättigte, substituierte oder unsubstituierte Alkylreste mit 1 bis 30 C-Atomen, Aryl- oder Aralkylreste, wie beispielsweise Phenyl-, Toluyl-, Naphthyl-oder Benzylreste, die am aromatischen Kern durch Alkyl($C_1$-$C_{30}$)-, Alkoxy($C_1$-$C_{30}$)-, Halogenalkyl($C_1$-$C_{30}$)-, Halogenalkoxy($C_1$-$C_{30}$)-, Hydroxylgruppen oder Halogenatome, wie Fluor-, Chlor-, Brom- oder Jodatome, substituiert sein können, darstellen, und das Anion $X^-$ ein Halogenanion, wie beispielsweise ein Chlor-, Brom- oder Jodanion, bedeutet, mit einem Boratsalz in Wasser oder Gemischen aus Wasser und organischem Lösungsmittel, wie beispielsweise Isopropanol, Isobutanol oder Methylisobutylketon, bei Temperaturen von etwa 20 °C bis etwa 90 °C, vorzugsweise von etwa 50 °C bis etwa 80 °C, hergestellt werden.

Die Verbindungen und Verbindungsgemische der allgemeinen Formel (I) fallen in guter Ausbeute und Reinheit an und können direkt aus dem Reaktionsmedium durch Abfiltrieren isoliert werden.

Die Synthese der Verbindungen der genannten allgemeinen Formel (II) wird beispielsweise beschrieben in J. Chem. Soc., Chem. Commun. 1984, 1233 - 34, Chem. Ber. 114 (1981), 3589-3598, J. Fluorine Chem. 23 (1983), 339 und der deutschen Offenlegungsschrift DE-OS 29 36 211.

So werden beispielsweise die vorstehenden Verbindungen (1) bis (6) durch Umsetzen der nachstehenden Ausgangsverbindungen (13) und (14) mit Natrium-tetra-phenylborat, Natrium-tetra-p-chlorphenylborat oder Natrium-tetra-p-toluylborat hergestellt (siehe hierzu die nachstehenden Herstellungsbeispiele 1 und 2). Natrium-tetra-p-chlorphenylborat und Natrium-tetra-p-toluylborat wurden nach der Vorschrift von H. Holzapfel, C. Richter, J. Prakt. Chem. 26 (1964), 15 - 23, dargestellt.

$$C_8F_{17}\text{-}CH_2\text{-}CH_2\text{-}\overset{+}{P}(\text{Phenyl})_3 \qquad J^- \qquad (13)$$

$$Rf\text{-}CH_2\text{-}CH_2\text{-}\overset{+}{P}(\text{Phenyl})_3 \qquad J^- \qquad (14)$$

$$(Rf = C_6F_{13} \text{ bis } C_{11}F_{23})$$

Die erfindungsgemäßen Verbindungen der obengenannten allgemeinen Formel (I) sind hervorragend geeignet für den Einsatz als Ladungssteuermittel in elektrophotographischen Tonern und Entwicklern für elektrophotographische Aufzeichnungsverfahren.

Die nachstehenden Herstellungsbeispiele dienen zur Erläuterung der Erfindung, ohne diese darauf zu beschränken.

**Herstellungsbeispiel 1**

8,4 g (0,01 Mol) der Verbindung (13) (Molekulargewicht 836, Darstellung beschrieben in J. Chem. Soc., Chem. Commun., 1984, 1233-34) werden in 150 ml Wasser/Isopropanol (1:1 Volumenteile) gelöst. Dann werden langsam 3,4 g (0,01 Mol) Natrium-tetra-phenylborat unter Rühren zugegeben. Anschließend wird mit Wasser/Isopropanol auf 400 ml aufgefüllt und 30 Minuten zum Sieden erhitzt. Der angefallene weiße Niederschlag wird heiß abgenutscht, mit Wasser/Isopropanol gewaschen und bei 50 °C im Vakuum getrocknet.
Ausbeute: 9,3 g (90,5 % d.Th.) der Verbindung (1)
Molekulargewicht: 1028
Schmelzpunkt: 169 - 170 °C

| | | | | | | |
|---|---|---|---|---|---|---|
| Elementaranalyse: | ber. | 60,7% C, | 3,8% H, | 3,0% P, | 1,1% B | |
| | gef. | 60,7% C, | 3,7% H, | 3,0% P, | 0,9% B, | 0,06% Wasser |

$^1$H-NMR (in DMSO-d6): 2,58 (Multiplett, 2 Methylen-H), 4,02 (Multiplett, 2 Methylen-H), 7,00 (Multiplett, 20 Phenyl-H des Tetraphenylborations), 7,83 (15 Phenyl-H des Phosphoniumkations) ppm.

**Herstellungsbeispiel 2**

Zur Herstellung der Verbindung (2) wird wie in Herstellungsbeispiel 1 beschrieben verfahren, mit dem Unterschied, daß statt Natrium-tetraphenylborat 4,0 g (0,01 Mol) Natrium-tetra-p-toluylborat verwendet werden.
Ausbeute: 9,7 g (89,5 % d.Th.) der Verbindung (2)
Molekulargewicht: 1084
Schmelzpunkt: 189 -190 °C

| | | | | | | |
|---|---|---|---|---|---|---|
| Elementaranalyse: | ber. | 62,0% C, | 4,3% H, | 2,9% P, | 1,0% B | |
| | gef. | 62,1% C, | 4,2% H, | 2,4% P, | 0,9% B, | 0,07 % Wasser |

$^1$H-NMR (in DMSO-d6): 2,14 (Singulett, 3 Toluyl-H), 2,60 (Multiplett, 2 Methylen-H), 3,99 (Multiplett, 2 Methylen-H), 6,88 (Multiplett, 16 p-Toluyl-H), 7,82 (Multiplett, 15 Phenyl-H des Phosphoniumkations) ppm.

## Patentansprüche

**1.** Phosphoniumverbindungen der allgemeinen Formel (I)

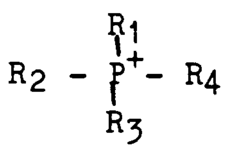
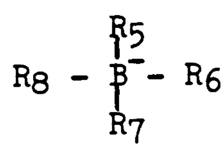
(I),

in welcher mindestens einer der Reste $R_1$ bis $R_4$ einen geradkettigen oder verzweigten, fluorsubstituierten, gesättigten Alkylrest mit 1 bis 30 C-Atomen und 3 bis 50 F-Atomen bedeutet, welcher weitere Halogenatome, Hydroxyl- und/oder Chlormethyl- und/oder Carbonsäureamid- und/oder Sulfonsäureamid- und/oder Urethan- und/oder Keto-und/oder Amino- und/oder $R_9$-O-$R_{10}$-Gruppen, worin $R_9$ und $R_{10}$ Alkyl($C_1$-$C_{30}$)-Reste darstellen, enthalten kann, oder mindestens einer der Reste $R_1$ bis $R_4$ einen fluorsubstituierten Arylrest, oder einen am aromatischen Kern fluorsubstituierten Aralkylrest darstellt, wobei der Aryl- oder Aralkylrest am aromatischen Kern zusätzlich durch gesättigte oder ungesättigte, geradkettige oder verzweigte Alkyl($C_1$-$C_{30}$)-, Alkoxy($C_1$-$C_{30}$)-, Halogenalkyl($C_1$-$C_{30}$)-, Halogenalkoxy($C_1$-$C_{30}$)-, Hydroxylgruppen oder weitere Halogenatome, substituiert sein kann, und im Falle eines Aralkylrestes die Alkylbrücke zwischen Phosphoratom und aromatischem Ring 1 bis 30 C-Atome enthält, und höchstens drei der Reste $R_1$ bis $R_4$ unabhängig voneinander Wasserstoffatome, geradkettige oder verzweigte, ungesättigte oder gesättigte, substituierte oder unsubstituierte Alkylreste mit 1 bis 30 C-Atomen, Aryl- oder Aralkylreste, die am aromatischen Kern durch Alkyl($C_1$-$C_{30}$)-, Alkoxy($C_1$-$C_{30}$)-, Halogenalkyl($C_1$-$C_{30}$)-, Halogenalkoxy($C_1$-$C_{30}$)-, Hydroxylgruppen oder Halogenatome substituiert sein können, darstellen, und $R_5$ bis $R_8$ Arylreste, Aralkylreste, oder Halogenarylreste bedeuten, sowie Gemische dieser Verbindungen.

**2.** Verbindungen der in Anspruch 1 genannten allgemeinen Formel (I), in welcher mindestens einer der Reste $R_1$ bis $R_4$ einen geradkettigen oder verzweigten, fluorsubstituierten, gesättigten Alkylrest mit 4 bis 17 C-Atomen und 3 bis 25 F-Atomen bedeutet, welcher weitere Halogenatome, Hydroxyl- und/oder Chlormethyl- und/oder Keto- und/oder $R_9$-O-$R_{10}$-Gruppen, worin $R_9$ und $R_{10}$ Alkyl($C_1$-$C_{18}$)-Reste darstellen, enthalten kann, oder mindestens einer der Reste $R_1$ bis $R_4$ einen fluorsubstituierten Arylrest oder einen am aromatischen Kern fluorsubstituierten Aralkylrest darstellt, wobei der Aryl- oder Aralkylrest am aromatischen Kern zusätzlich durch gesättigte oder ungesättigte, geradkettige oder verzweigte Alkyl($C_1$-$C_{18}$)-, Alkoxy($C_1$-$C_{18}$)-, Halogenalkyl($C_1$-$C_{18}$)-, Halogenalkoxy($C_1$-$C_{18}$)-, Hydroxylgruppen oder weitere Halogenatome substituiert sein kann, und im Falle eines Aralkylrestes die Alkylbrücke zwischen Phosphoratom und aromatischem Ring 1 bis 18 C-Atome enthält, und höchstens drei der Reste $R_1$ bis $R_4$ unabhängig voneinander Wasserstoffatome, geradkettige oder verzweigte, ungesättigte oder gesättigte, substituierte oder unsubstituierte Alkylreste mit 1 bis 18 C-Atomen, Aryl-oder Aralkylreste, die am aromatischen Kern durch Alkyl($C_1$-$C_{18}$)-, Alkoxy($C_1$-$C_{18}$)-, Halogenalkyl($C_1$-$C_{18}$)-, Halogenalkoxy($C_1$-$C_{18}$)-, Hydroxylgruppen oder Halogenatome substituiert sein können, darstellen, und $R_5$ bis $R_8$ Phenyl-, p-Toluyl-, p-Chlorphenyl- oder Naphthylreste bedeuten, sowie Gemische dieser Verbindungen.

**3.** Verbindungen der in Anspruch 1 genannten allgemeinen Formel (I), in welcher mindestens einer der Reste $R_1$ bis $R_4$ die Gruppe $-CH_2-CH_2-C_8F_{17}$ oder $-CH_2-CH_2-Rf$ (mit Rf = $C_6F_{13}$ bis $C_{11}F_{23}$) und höchstens drei der Reste $R_2$ bis $R_4$ einen Phenylrest und die Reste $R_5$ bis $R_8$ Phenyl-, p-Toluyl-, p-Chlorphenyl- oder Naphthylreste bedeuten, sowie Gemische dieser Verbindungen.

**4.** Verbindung der Formel
$C_8F_{17}-CH_2-CH_2-\overset{+}{P}(Phenyl)_3 \quad B(Phenyl)_4^-$

**5.** Verbindung der Formel
$C_8F_{17}-CH_2-CH_2-\overset{+}{P}(Phenyl)_3 \quad B(p\text{-}Toluyl)_4^-$

**6.** Verbindung der Formel
$C_8F_{17}-CH_2-CH_2-\overset{+}{P}(Phenyl)_3 \quad B(p\text{-}Chlorphenyl)_4^-$

**7.** Verbindungen bzw. Gemische aus Verbindungen der Formel
$Rf-CH_2-CH_2-\overset{+}{P}(Phenyl)_3 \quad B(Phenyl)_4^-$
(Rf = $C_6F_{13}$ bis $C_{11}F_{23}$)

**8.** Verbindungen bzw. Gemische aus Verbindungen der Formel
$Rf-CH_2-CH_2-\overset{+}{P}(Phenyl)_3 \quad B(p\text{-}Toluyl)_4^-$
(Rf = $C_6F_{13}$ bis $C_{11}F_{23}$)

**9.** Verbindungen bzw. Gemische aus Verbindungen der Formel
$Rf-CH_2-CH_2-\overset{+}{P}(Phenyl)_3 \quad B(p\text{-}Chlorphenyl)_4^-$
(Rf = $C_6F_{13}$ bis $C_{11}F_{23}$)

**10.** Verfahren zur Herstellung von Phosphoniumverbindungen bzw. Gemischen aus Phosphoniumverbindungen der in Anspruch 1 genannten allgemeinen Formel (I), dadurch gekennzeichnet, daß man Phosphoniumverbindungen bzw. Gemische aus Phosphoniumverbindungen der allgemeinen Formel (II)

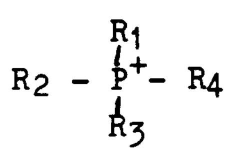 $X^-$ (II),

in welcher mindestens einer der Reste $R_1$ bis $R_4$ einen geradkettigen oder verzweigten, fluorsubstituierten, gesättigten Alkylrest mit 1 bis 30 C-Atomen und 3 bis 50 F-Atomen bedeutet, welcher weitere Halogenatome, Hydroxyl- und/oder Chlormethyl-und/oder Carbonsäureamid und/oder Sulfonsäureamid- und/oder Urethan- und/oder Keto-und/oder Amino- und/oder $R_9$-O-$R_{10}$-Gruppen, worin $R_9$ und $R_{10}$ Alkyl($C_1$-$C_{30}$)-Reste darstellen, enthalten kann, oder mindestens einer der Reste $R_1$ bis $R_4$ einen fluorsubstituierten Arylrest oder einen am aromatischen Kern fluorsubstituierten Aralkylrest darstellt, wobei der Aryl-oder Aralkylrest am aromatischen Kern zusätzlich durch gesättigte oder ungesättigte, geradkettige oder verzweigte Alkyl($C_1$-$C_{30}$)-, Alkoxy($C_1$-$C_{30}$)-, Halogenalkyl($C_1$-$C_{30}$)-, Halogenalkoxy($C_1$-$C_{30}$)-, Hydroxylgruppen oder weitere Halogenatome substituiert sein kann, und im Falle eines Aralkylrestes die Alkylbrücke zwischen Phosphoratom und aromatischem Ring 1 bis 30 C-Atome enthält, und höchstens drei der Reste $R_1$ bis $R_4$ unabhängig voneinander Wasserstoffatome, geradkettige oder verzweigte, ungesättigte oder gesättigte, substituierte oder unsubstituierte Alkylreste mit 1 bis 30 C-Atomen, Aryl- oder Aralkylreste, die am aromatischen Kern durch Alkyl($C_1$-$C_{30}$)-, Alkoxy($C_1$-$C_{30}$)-, Halogenalkyl($C_1$-$C_{30}$)-, Halogenalkoxy($C_1$-$C_{30}$)-, Hydroxylgruppen oder Halogenatome substituiert sein können, darstellen, und $X^-$ ein Halogenanion bedeutet, mit einem Boratsalz in Wasser oder Gemischen aus Wasser und organischem Lösungsmittel bei Temperaturen von etwa 20 °C bis etwa 90 °C umsetzt.

**11.** Verfahren nach Anspruch 10, dadurch gekennzeichnet, daß in der dort genannten allgemeinen Formel (II) $X^-$ ein Chlor-, Brom- oder Jodanion bedeutet.

**12.** Verfahren nach mindestens einem der Ansprüche 10 und 11, dadurch gekennzeichnet, daß man in Wasser oder in einem Gemisch aus Wasser und Isopropanol, Isobutanol oder Methylisobutylketon umsetzt.

**13.** Verfahren nach mindestens einem der Ansprüche 10 bis 12, dadurch gekennzeichnet, daß man bei etwa 50 °C bis etwa 80 °C umsetzt.

**14.** Verfahren nach mindestens einem der Ansprüche 10 bis 13, dadurch gekennzeichnet, daß man mit Natrium-tetraphenylborat, Natrium-tetra-p-toluylborat oder Natrium-tetra-p-chlorphenylborat als Boratsalz umsetzt.

## Claims

**1.** A phosphonium compound of the formula (I):

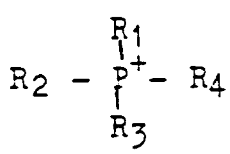

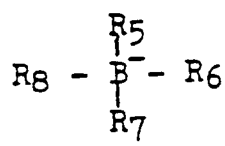

(I)

in which at least one of the radicals $R_1$ to $R_4$ is a linear or branched, fluorine-substituted, saturated alkyl radical having 1 to 30 carbon atoms and 3 to 50 fluorine atoms, which can contain further halogen atoms and hydroxyl and/or chloromethyl and/or carboxamide and/or sulfonamide and/or urethane and/or keto and/or amino and/or $R_9$-O-$R_{10}$ groups in which $R_9$ and $R_{10}$ are $C_1$-$C_{30}$ alkyl radicals, or at least one of the radicals $R_1$ to $R_4$ is a fluorine-substituted aryl radical or an aralkyl radical substituted by fluorine on the aromatic ring, it being possible for the aryl or aralkyl radical to be further substituted on the aromatic ring by saturated or unsaturated, linear or branched $C_1$-$C_{30}$ alkyl, $C_1$-$C_{30}$ alkoxy, $C_1$-$C_{30}$ haloalkyl, $C_1$-$C_{30}$ haloalkoxy or hydroxyl groups or further halogen atoms, and the alkyl bridge between the phosphorus atom and the aromatic ring, in the case of an aralkyl radical, containing 1 to 30 carbon atoms, and at most three of the radicals $R_1$ to $R_4$ independently of the others are hydrogen atoms, linear or branched, unsaturated or saturated, substituted or unsubstituted alkyl radicals having 1 to 30 carbon atoms, or aryl or aralkyl radicals which can be substituted on the aromatic ring by $C_1$-$C_{30}$ alkyl, $C_1$-$C_{30}$ alkoxy, $C_1$-$C_{30}$ haloalkyl, $C_1$-$C_{30}$haloalkoxy or hydroxyl groups or halogen atoms, and $R_5$ to $R_8$ are aryl radicals, aralkyl radicals or haloaryl radicals, or a mixture of these compounds.

**2.** A compound of the formula (I) given in claim 1 in which at least one of the radicals $R_1$ to $R_4$ is a linear or branched, fluorine-substituted, saturated alkyl radical having 4 to 17 carbon atoms and 3 to 25

fluorine atoms, which can contain further halogen atoms and hydroxyl and/or chloromethyl and/or keto and/or $R_9$-O-$R_{10}$ groups in which $R_9$ and $R_{10}$ are $C_1$-$C_{18}$ alkyl radicals, or at least one of the radicals $R_1$ to $R_4$ is a fluorine- substituted aryl radical or an aralkyl radical substituted by fluorine on the aromatic ring, it being possible for the aryl or aralkyl radical to be further substituted on the aromatic ring by saturated or unsaturated, linear or branched $C_1$-$C_{18}$ alkyl, $C_1$-$C_{18}$ alkoxy, $C_1$-$C_{18}$ haloalkyl, $C_1$-$C_{18}$ haloalkoxy or hydroxyl groups or further halogen atoms, and the alkyl bridge between the phosphorus atom and the aromatic ring, in the case of an aralkyl radical, containing 1 to 18 carbon atoms, and at most three of the radicals $R_1$ to $R_4$ independently of the others are hydrogen atoms, linear or branched, unsaturated or saturated, substituted or unsubstituted alkyl radicals having 1 to 18 carbon atoms, or aryl or aralkyl radicals which can be substituted on the aromatic ring by $C_1$-$C_{18}$ alkyl, $C_1$-$C_{18}$ alkoxy, $C_1$-$C_{18}$ haloalkyl, $C_1$-$C_{18}$ haloalkoxy or hydroxyl groups or halogen atoms, and $R_5$ to $R_8$ are phenyl, p-tolyl, p-chlorophenyl or naphthyl radicals, or a mixture of these compounds.

**3.** A compound of the formula (I) given in claim 1 in which at least one of the radicals $R_1$ to $R_4$ is the group $-CH_2-CH_2-C_8F_{17}$ or $-CH_2-CH_2-Rf$ (where $Rf = C_6F_{13}$ to $C_{11}F_{23}$), and at most three of the radicals $R_2$ to $R_4$ are a phenyl radical, and the radicals $R_5$ to $R_8$ are phenyl, p-tolyl, p-chlorophenyl or naphthyl radicals, or a mixture of these compounds.

**4.** The compound of the formula
$C_8F_{17}$-$CH_2$-$CH_2$-$\overset{+}{P}$(phenyl)$_3$ B(phenyl)$_4^-$

**5.** The compound of the formula
$C_8F_{17}$-$CH_2$-$CH_2$-$\overset{+}{P}$(phenyl)$_3$ B(p-tolyl)$_4^-$

**6.** The compound of the formula
$C_8F_{17}$-$CH_2$-$CH_2$-$\overset{+}{P}$(phenyl)$_3$ B(p-chlorophenyl)$_4^-$

**7.** A compound or a mixture of compounds of the formula
Rf-$CH_2$-$CH_2$-$\overset{+}{P}$(phenyl)$_3$ B(phenyl)$_4^-$
($Rf = C_6F_{13}$ to $C_{11}F_{23}$)

**8.** A compound or a mixture of compounds of the formula
Rf-$CH_2$-$CH_2$-$\overset{+}{P}$(phenyl)$_3$ B(p-tolyl)$_4^-$
($Rf = C_6F_{13}$ to $C_{11}F_{23}$)

**9.** A compound or a mixture of compounds of the formula
Rf-$CH_2$-$CH_2$-$\overset{+}{P}$(phenyl)$_3$ B(p-chlorophenyl)$_4^-$
($Rf = C_6F_{13}$ to $C_{11}F_{23}$)

**10.** A process for the preparation of phosphonium compounds or mixtures of phosphonium compounds of the formula (I) given in claim 1, which comprises reacting phosphonium compounds or mixtures of phosphonium compounds of the formula (II):

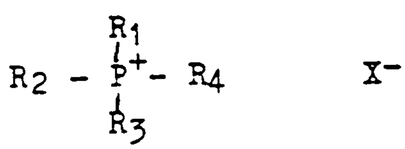

(II)

in which at least one of the radicals $R_1$ to $R_4$ is a linear or branched, fluorine-substituted, saturated alkyl radical having 1 to 30 carbon atoms and 3 to 50 fluorine atoms, which can contain further halogen atoms and hydroxyl and/or chloromethyl and/or carboxamide and/or sulfonamide and/or urethane and/or keto and/or amino and/or $R_9$-O-$R_{10}$ groups, in which $R_9$ and $R_{10}$ are $C_1$-$C_{30}$ alkyl radicals, or at least one of the radicals $R_1$ to $R_4$ is a fluorine-substituted aryl radical or an aralkyl radical substituted by fluorine on the aromatic ring, it being possible for the aryl or aralkyl radical to be further substituted on the aromatic ring by saturated or unsaturated, linear or branched $C_1$-$C_{30}$ alkyl, $C_1$-$C_{30}$ alkoxy, $C_1$-$C_{30}$ haloalkyl, $C_1$-$C_{30}$ haloalkoxy or hydroxyl groups or further halogen atoms, and the alkyl bridge between

the phosphorus atom and the aromatic ring, in the case of an aralkyl radical, containing 1 to 30 carbon atoms, and at most three of the radicals $R_1$ to $R_4$ independently of the others are hydrogen atoms, linear or branched, unsaturated or saturated, substituted or unsubstituted alkyl radicals having 1 to 30 carbon atoms, or aryl or aralkyl radicals which can be substituted on the aromatic ring by $C_1$-$C_{30}$ alkyl, $C_1$-$C_{30}$ alkoxy, $C_1$-$C_{30}$ haloalkyl, $C_1$-$C_{30}$ haloalkoxy or hydroxyl groups or halogen atoms, and $X^-$ is a halogen anion, with a borate salt, in water or mixtures of water and organic solvent, at temperatures from about 20 °C to about 90 °C.

**11.** The process as claimed in claim 10, wherein $X^-$ in the formula (II) given therein is a chlorine, bromine or iodine anion.

**12.** The process as claimed in at least one of claims 10 and 11, wherein the reaction is carried out in water or in a mixture of water and isopropanol, isobutanol or methyl isobutyl ketone.

**13.** The process as claimed in at least one of claims 10 to 12, wherein the reaction is carried out at about 50 °C to about 80 °C.

**14.** The process as claimed in at least one of claims 10 to 13, wherein the reaction is carried out with sodium tetraphenylborate, sodium tetra-p-tolylborate or sodium tetra-p-chlorophenylborate as the borate salt.

**Revendications**

**1.** Composés phosphonium de formule générale (I)

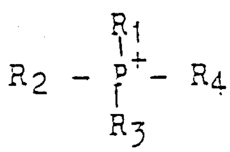

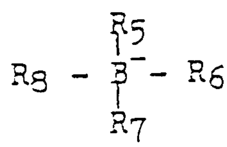

(I),

dans laquelle au moins un des restes $R_1$ à $R_4$ représente un reste alkyle saturé, à chaîne linéaire ou ramifiée, substitué par du fluor, ayant de 1 à 30 atomes de carbone et de 3 à 50 atomes de fluor, qui peut contenir d'autres atomes d'halogène, des groupes hydroxyle et/ou chlorométhyle et/ou carbamide et/ou sulfamide et/ou uréthanne et/ou céto et/ou amino et/ou $R_9$-O-$R_{10}$, où $R_9$ et $R_{10}$ représentent des restes alkyle ayant de 1 à 30 atomes de carbone, ou bien au moins un des restes $R_1$ à $R_4$ représente un reste aryle substitué par du fluor, ou bien un reste aralkyle dont le noyau aromatique est substitué par du fluor, le noyau aromatique du reste aryle ou aralkyle pouvant en outre être substitué par des groupes alkyle ayant de 1 à 30 atomes de carbone, alcoxy ayant de 1 à 30 atomes de carbone, halogénoalkyle ayant de 1 à 30 atomes de carbone, halogénoalcoxy ayant de 1 à 30 atomes de carbone, saturés ou insaturés, linéaires ou ramifiés, par des groupes hydroxyle ou par d'autres atomes d'halogène et, dans le cas d'un reste aralkyle, le pont alkyle entre l'atome de phosphore et le cycle aromatique, comporte de 1 à 30 atomes de carbone, et au plus trois des restes $R_1$ à $R_4$, indépendamment les uns des autres, représentent des atomes d'hydrogène, des restes alkyle linéaires ou ramifiés, saturés ou insaturés, substitués ou non substitués, ayant de 1 à 30 atomes de carbone, des restes aryle ou aralkyle, dont le noyau aromatique peut être substitué par des groupes alkyle ayant de 1 à 30 atomes de carbone, alcoxy ayant de 1 à 30 atomes de carbone, halogénoalkyle ayant de 1 à 30 atomes de carbone, halogénoalcoxy ayant de 1 à 30 atomes de carbone ou hydroxyle, ou par des atomes d'halogène et $R_5$ à $R_8$ représentent des restes aryle, aralkyle ou halogénoaryle, ainsi que les mélanges de ces composés.

**2.** Composés ayant la formule générale (I) citée dans la revendication 1, dans laquelle au moins un des restes $R_1$ à $R_4$ est un reste alkyle linéaire ou ramifié, substitué par du fluor, saturé, ayant de 4 à 17 atomes de carbone et de 3 à 25 atomes de fluor, qui peut contenir d'autres atomes d'halogène, des groupes hydroxyle et/ou chlorométhyle et/ou céto et/ou $R_9$-O-$R_{10}$, où $R_9$ et $R_{10}$ représentent des restes alkyle ayant de 1 à 18 atomes de carbone, ou bien au moins un des restes $R_1$ à $R_4$ représente un reste aryle substitué par du fluor, ou un reste aralkyle dont le noyau aromatique est substitué par du

fluor, le noyau aromatique du reste aryle ou aralkyle pouvant en outre être substitué par des groupes alkyle ayant de 1 à 18 atomes de carbone, alcoxy ayant de 1 à 18 atomes de carbone, halogénoalkyle ayant de 1 à 18 atomes de carbone, halogénoalcoxy ayant de 1 à 18 atomes de carbone, saturés ou insaturés, linéaires ou ramifiés, par des groupes hydroxyle ou par d'autres atomes d'halogène et, dans le cas d'un reste aralkyle, le pont alkyle, entre l'atome de phosphore et le cycle aromatique comporte de 1 à 18 atomes de carbone, et au plus trois des restes $R_1$ à $R_4$, indépendamment les uns des autres, représentent des atomes d'hydrogène, des restes alkyle linéaires ou ramifiés, saturés ou insaturés, substitués ou non substitués, ayant de 1 à 18 atomes de carbone, des restes aryle ou, dont le noyau aromatique peut être substitué par des groupes alkyle ayant de 1 à 18 atomes de carbone, alcoxy ayant de 1 à 18 atomes de carbone, halogénoalkyle ayant de 1 à 18 atomes de carbone, halogénoalcoxy ayant de 1 à 18 atomes de carbone ou hydroxyle, ou par des atomes d'halogène, et $R_5$ à $R_8$ représentent des restes phényle, p-toluyle, p-chlorophényle ou naphtyle, ainsi que les mélanges de ces composés.

**3.** Composés ayant la formule générale (I) citée dans la revendication 1, dans laquelle au moins un des restes $R_1$ à $R_4$ est un groupe $-CH_2-CH_2-C_8F_{17}$ ou $-CH_2-CH_2-Rf$ (avec $Rf = C_6F_{13}$ à $C_{11}F_{23}$), au plus trois des restes $R_2$ à $R_4$ représentent un reste phényle et les restes $R_5$ à $R_8$ représentant des restes phényle, p-toluyle, p-chlorophényle ou naphtyle, ainsi que les mélanges de ces composés.

**4.** Composé de formule
$C_8F_{17}-CH_2-CH_2-\overset{+}{P}(\text{phényle})_3$ $B(\text{phényle})_4^-$

**5.** Composé de formule
$C_8F_{17}-CH_2-CH_2-\overset{+}{P}(\text{phényle})_3$ $B(\text{p-toluyle})_4^-$

**6.** Composé de formule
$C_8F_{17}-CH_2-CH_2-\overset{+}{P}(\text{phényle})_3$ $B(\text{p-chlorphényle})_4^-$

**7.** Composés, ou respectivement mélanges de composés, de formule
$Rf-CH_2-CH_2-\overset{+}{P}(\text{phényle})_3$ $B(\text{phényle})_4^-$
($Rf = C_6F_{13}$ à $C_{11}F_{23}$)

**8.** Composés, ou respectivement mélanges de composés, de formule
$Rf-CH_2-CH_2-\overset{+}{P}(\text{phényle})_3$ $B(\text{p-toluyle})_4^-$
($Rf = C_6F_{13}$ à $C_{11}F_{23}$)

**9.** Composés, ou respectivement mélanges de composés, de formule
$Rf-CH_2-CH_2-\overset{+}{P}(\text{phényle})_3$ $B(\text{p- chlorphényle})_4^-$
($Rf = C_6F_{13}$ à $C_{11}F_{23}$)

**10.** Procédé de préparation de composés phosphonium, ou respectivement de mélanges de composés phosphonium, ayant la formule générale (I) citée dans la revendication 1, caractérisé en ce qu'on fait réagir les composés phosphonium, ou respectivement les mélanges de composés phosphonium, de formule générale (II)

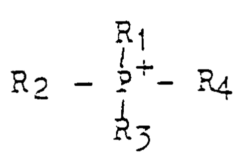 $X^-$ (II),

dans laquelle au moins un des restes $R_1$ à $R_4$ représente un reste alkyle saturé, à chaîne linéaire ou ramifiée, substitué par du fluor, ayant de 1 à 30 atomes de carbone et de 3 à 50 atomes de fluor, qui peut contenir d'autres atomes d'halogène, des groupes hydroxyle et/ou chlorométhyle et/ou carbamide et/ou sulfamide et/ou uréthanne et/ou céto et/ou amino et/ou $R_9-O-R_{10}$, où $R_9$ et $R_{10}$ représentent des restes alcoyle ayant de 1 à 30 atomes de carbone, ou bien au moins un des restes $R_1$ à $R_4$ représente un reste aryle substitué par du fluor ou bien un reste aralkyle dont le noyau aromatique est substitué

par du fluor, le noyau aromatique du reste aryle ou aralkyle pouvant en outre être substitué par des groupes alkyle ayant de 1 à 30 atomes de carbone, alcoxy ayant de 1 à 30 atomes de carbone, halogénoalkyle ayant de 1 à 30 atomes de carbone, halogénoalcoxy ayant de 1 à 30 atomes de carbone, saturés ou insaturés, linéaires ou ramifiés, par des groupes hydroxyle, ou par d'autres atomes d'halogène et, dans le cas d'un reste aralkyle, le pont alkyle entre l'atome de phosphore et le cycle aromatique comporte de 1 à 30 atomes de carbone, et au plus trois des restes $R_1$ à $R_4$, indépendamment les uns des autres, représentent des atomes d'hydrogène, des restes alkyle linéaires ou ramifiés, saturés ou insaturés, substitués ou non substitués, ayant de 1 à 30 atomes de carbone, des restes aryle ou aralkyle, dont le noyau aromatique peut être substitué par des groupes alkyle ayant de 1 à 30 atomes de carbone, alcoxy ayant de 1 à 30 atomes de carbone, halogénoalkyle ayant de 1 à 30 atomes de carbone, halogénoalcoxy ayant de 1 à 30 atomes de carbone ou hydroxyle, ou par des atomes d'halogène, et dans laquelle $X^-$ représente un anion halogénure, avec un sel boraté dans l'eau ou dans des mélanges d'eau et de solvant organique à des températures d'environ 20 °C à environ 90 °C.

**11.** Procédé selon la revendication 10, caractérisé en ce que dans la formule générale (II) qui y est citée, $X^-$ représente un anion chlorure, bromure ou iodure.

**12.** Procédé selon l'une au moins des revendications 10 et 11, caractérisé en ce qu'on effectue la réaction dans l'eau ou dans un mélange d'eau et d'isopropanol, d'iso-butanol ou de méthylisobutylcétone.

**13.** Procédé selon l'une au moins des revendications 10 à 12, caractérisé en ce qu'on effectue la réaction à une température comprise entre environ 50 °C et environ 80 °C.

**14.** Procédé selon l'une au moins des revendications 10 à 13, caractérisé en ce qu'on utilise comme sel boraté le tétra-phénylborate de sodium, le tétra-p-toluylborate de sodium ou le tétra-p-chlorophénylborate de sodium.